# EUROPÄISCHE PATENTSCHRIFT

(11) **EP 1 769 293 B1**
(45) Veröffentlichungstag und Bekanntmachung des Hinweises auf die Patenterteilung: **01.04.2009**
(21) Anmeldenummer: 05767972.2
(22) Anmeldetag: 13.07.2005
(51) Int. Cl.: G05B 19/042, G05B 19/418

(54) **AUTOMATISIERUNGSSYSTEM UND EIN-/AUSGABEBAUGRUPPE FÜR DASSELBE**
AUTOMATION SYSTEM AND INPUT/OUTPUT COMPONENTRY FOR THE SAME
SYSTEME D'AUTOMATISATION ET MODULE D'ENTREES/SORTIES POUR CE SYSTEME

(30) Priorität: 19.07.2004 DE 102004034862
(43) Veröffentlichungstag der Anmeldung: 04.04.2007
(73) Patentinhaber: SIEMENS AKTIENGESELLSCHAFT, 80333 München (DE)
(72) Erfinder: HAUF, Ronald, 91096 Möhrendorf (DE)
(86) Internationale Anmeldenummer: PCT/EP2005/053343
(87) Internationale Veröffentlichungsnummer: WO 2006/008257

(56) Entgegenhaltungen:
- WO-A-01/14940
- DE-A1- 19 742 716
- DE-A1- 19 928 517

## Beschreibung

Die vorliegende Erfindung betrifft ein Automatisierungssystem und eine Ein-/Ausgabebaugruppe für das Automatisierungssystem. Insbesondere betrifft die vorliegende Erfindung eine Ein-/Ausgabebaugruppe für ein sicherheitsgerichtetes Automatisierungssystem gemäß dem Oberbegriff des Anspruchs 1, sowie ein entsprechendes Automatisierungssystem zum Ausführen von sicherheitsgerichteten Automatisierungsfunktionen gemäß dem Oberbegriff des Anspruchs 4.

Automatisierungssysteme bedürfen zum Erledigen gewünschter automatisierter Sollfunktionen einer entsprechenden Steuerung und Regelung der an einem Automatisierungsprozess beteiligten Baugruppen. Zur Steuerung kommt dabei in aller Regel eine so genannte speicherprogrammierbare Steuerung (SPS) zum Einsatz, die beispielsweise über einen Feldbus (wie z.B. den in Deutschland über DIN 19245 und in Europa über EN 50170 normierten PROFIBUS) mit den am Feldbus angeschlossenen Baugruppen kommuniziert.

Während des Betriebs des Automatisierungssystems werden über entsprechend normierte Busprotokolle die von der SPS ausgehenden Steuersignale über den Feldbus an die zuvor in einer Projektierungsphase festgelegten Baugruppen weitergegeben oder aber auch Signale von anderen Baugruppen empfangen. Die einzelnen Baugruppen, wie beispielsweise Ausgabebaugruppen zum Anschließen von Aktoren, Eingabebaugruppen zum Anschließen von Sensoren, oder auch Baugruppen, die dezentral bestimmte abgeschlossene Automatisierungsfunktionen weitgehend eigenständig übernehmen, werden somit zu einem Automatisierungssystem zusammengefasst, das im Betrieb die zuvor projektierten Automatisierungsfunktionen weitgehend selbstständig abarbeitet.

Zum sicheren Betrieb solcher Automatisierungssysteme müssen mögliche Gefahrenquellen erkannt und nach festgelegten Normen und Richtlinien, wie sie beispielsweise aus der EU-Maschinenrichtlinie (98/37/EG) oder auch aus Produkthaftungsgesetzen abgeleitet werden können, berücksichtigt werden. So ist beispielsweise bei einem im Betrieb auftretenden Fehlerfall sicherzustellen, dass die beteiligten Aktoren, wie beispielsweise Ventile in einen sicheren Zustand überführt und damit der weitere Betrieb des Automatisierungssystems unterbrochen wird.

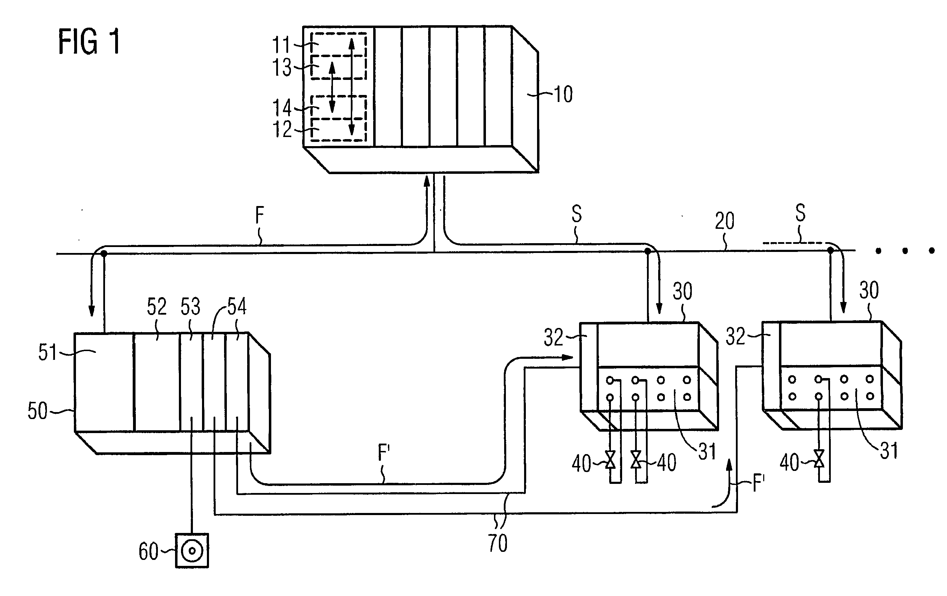

FIG 1 veranschaulicht eine Lösung eines Automatisierungssystems 1, das solche sicherheitsgerichteten Anforderungen erfüllen kann. Eine zentrale Steuerung 10 ist hier über einen Feldbus 20 mit mehreren Ausgabebaugruppen 30 verbunden. An den Ausgabebaugruppen 30 sind die Aktoren, wie beispielsweise die dargestellten Ventile 40 oder aber auch Lastschütze, etc. angeschlossen. Mittels eines über den Feldbus 20 übertragenen Standard-Busprotokolls S wird diese Aktorik von der Steuerung 10 entsprechend der zuvor projektierten Automatisierungsfunktionen gesteuert. Die Steuerung 10 kann dazu standardisierte Programmteile 11 und 12 aufweisen. Diese "Standard-Programmteile" können dabei in so genannte NC (numeric controller) und PLC (programmable logic controller) Programmteile aufgeteilt werden. NC-Programmteile 11 dienen dabei im Wesentlichen der Bewegungsführung der Maschine, während PLC-Programmteile 12 im Wesentlichen der logischen Verarbeitung von Prozesssignalen über Ein-Ausgangsbaugruppen dienen.

Zur Umsetzung der geforderten sicherheitsgerichteten Automatisierungsfunktionen gibt es verschiedene Ansätze. So könnte, wie in FIG 1 angedeutet, zur sicheren Steuerung des Automatisierungssystems eine sogenannte fehlersichere Steuerungen eingeführt werden. Bei solchen fehlersicheren Steuerungen laufen sicherheitsgerichtete Programmteile, sogenannte "fehlersichere-Programmteile" 13 und 14 und Standard-Programmteile 11 und 12, in der PLC und NC der Steuerbaugruppe 10 nebeneinander ab. Die sicherheitsgerichteten Programmteile zeichnen sich dabei im Wesentlichen dadurch aus, dass die für sie wesentlichen Routinen redundant bearbeitet werden. Dies hat zur Folge, dass sie im Vergleich zu Routinen aus Standard-Programmteilen bei der Bearbeitung höhere Zykluszeiten aufweisen. Wird von den fehlersicheren-Programmteilen nun ein Fehler beim Ausführen der Automatisierungsfunktionen erkannt, müssen zumindest bestimmte Aktoren in einen sicheren Zustand überführt werden, um keine Gefahrenquelle darzustellen. Konsequenterweise müssten für einen möglichst sicheren Betrieb alle Automatisierungsfunktionen, auch die von den Standard-Programmteilen gesteuerten, über diese fehlersicheren-Programmteile gesteuert werden. Dies hätte aber den Nachteil, dass sich der gesamte Automatisierungsablauf in einer für den Anwender meist nicht akzeptablen Weise verzögern würde.

Zur Vermeidung solcher zeitlichen Verzögerungen wird deshalb im Allgemeinen ein wie in FIG 1 dargestellter Ansatz gewählt. Die aktive sicherheitsgerichtete Abschaltung bestimmter Aktoren 40 erfolgt dabei, ohne oder auch mit Zwischenschaltung der Steuerung 10, durch eine entsprechende Sensorik 60, wie beispielsweise ein Not-Halt-Befehlsgerät, ein Lichtgitter oder eine Überfüllsicherung. Dazu ist eine Peripheriebaugruppe 50 vorgesehen, die ein Interface Modul 51 zur Anbindung an den Feldbus 20, ein Spannungsversorgungsmodul 52, ein Eingabemodul 53 zum Anschließen des Not-Halt-Befehlsgeräts 60, sowie zwei Lastschaltmodule 54 aufweist. Über entsprechende Verbindungen 70 zwischen Lastschaltmodulen 54 und Ausgabebaugruppen 30 werden die an der Ausgabebaugruppe angeschlossenen Aktoren 40 mit einer geeigneten Betriebsspannung aus dem Spannungsversorgungsmodul 52 versorgt. Wird nun der Sensor, hier das Not-Halt Befehlsgerät 60, aktiviert, so wird über die Steuerung 10 im Lastschaltmodul 54 die Spannungsversorgung für die Ausgabebaugruppe 30 und somit auch für die daran angeschlossenen Aktoren 40 abgeschaltet (z.B.: F'=0V) und damit die Aktoren 40 in einen sicheren Zustand überführt.

Entsprechend kann die Peripheriebaugruppe 50, die mittels des Interface Moduls 51 über den Feldbus 20 mit der Steuerung verbunden ist, auch auf fehlersichere-Programmteile aus der Steuerung 10 reagieren. Wird nun beispielsweise von den fehlersicheren-Programmteilen 13 oder 14 ein Fehler in der Steuerung erkannt, wird über den Feldbus 20 ein "fehlersicheres-Busprotokoll" F an die Peripheriebaugruppe 50 geführt. Als Reaktion darauf wird auch in diesem Fall im Lastschaltmodul 54 die Spannungsversorgung für die Ausgabebaugruppe 30 abgeschaltet und die daran angeschlossenen Aktoren in den sicheren Zustand überführt.

In beiden Fällen ist somit sichergestellt, dass unabhängig davon, ob die Steuerung 10 weiterhin versucht diese Ausgabebaugruppe 30 über das Standard-Busprotokoll S anzusprechen und zu steuern, die Aktoren 40 dieser Ausgabebaugruppe abgeschaltet und damit in einem sicheren Zustand verbleiben.

Ein solches, wie in Figur 1 dargestelltes, sicherheitsgerichtetes Automatisierungssystem hat aber den Nachteil, dass es eine aufwendige komplexe Netzwerktopologie aufweist. Insbesondere entsteht dies dadurch, dass die Wege für eine normale Steuerung und eine sicherheitsgerichtete Abschaltung voneinander getrennt sind. Zudem kann bei dem hier gezeigten Lösungsansatz im Fehlerfall immer nur eine ganze Ausgabebaugruppe und damit alle daran angeschlossenen Aktoren sicherheitsgerichtet geschaltet werden und nicht einzelne Aktoren selektiv. Müssen Aktoren mit Lastströmen bis zu mehreren Ampere geschaltet werden, sind zudem teure Lastschaltmodule zum Abschalten der jeweiligen Ausgabebaugruppen notwendig.

Aus der DE 197 427 16 A1 ist eine Steuer- und Datenübertragungsanlage bekannt, die weder zusätzliche Leitungen zur Übertragung von Steuersignalen, noch redundante, sicherheitsbezogene Baugruppen erforderlich macht. Dies wird dadurch erreicht, dass in einer Master-Steuereinrichtung und in den Busteilnehmern jeweils eine sicherheitsbezogene Einrichtung zum Ausführen von vorbestimmten Sicherheitsfunktionen angeordnet ist, und dass die sicherheitsbezogenen Einrichtungen über einen sowieso vorhandenen Feldbus miteinander kommunizieren können.

Aus der WO 01/14940 A1 ist eine Vorrichtung zum Steuern von sicherheitskritischen Prozessen bekannt, welche eine Steuerungseinheit und mehrere Signaleinheiten aufweist. Die Signaleinheiten können Fehlertelegramme aussenden. Die Fehlertelegramme werden innerhalb der Vorrichtung bevorzugt behandelt und können insbesondere eine allerhöchste Priorität erhalten. Dadurch werden andere Einheiten besonders schnell über Fehler auch in untergeordneten Bereichen der Vorrichtung informiert.

Aufgabe der vorliegenden Erfindung ist deshalb eine Ein-/Ausgabebaugruppe und ein entsprechendes Automatisierungssystem zum Ausführen von sicherheitsgerichteten Automatisierungsfunktionen bereitzustellen, das die zuvor genannten Nachteile überwindet und insbesondere für eine höhere Sicherheit sorgt.

Diese Aufgabe wird gelöst durch die Ein-/Ausgabebaugruppe mit den Merkmalen des Anspruchs 1, sowie durch das entsprechende Automatisierungssystem mit den Merkmalen des Anspruchs 4.

Insbesondere dadurch, dass die erfindungsgemäße Ein-/Ausgabebaugruppe des Automatisierungssystems so ausgebildet ist, dass sie sowohl von "Standard-Programmteilen" über ein "Standard-Busprotokoll" als auch von "fehlersicheren-Programmteilen" über ein "fehlersicheres-Busprotokoll" steuerbar ist und für die Ein-/Ausgabebaugruppe das fehlersichere-Busprotokoll eine höhere Priorität aufweist als das Standard-Busprotokoll kann eine einfachere Netzwerktopologie eines sicherheitsgerichteten Automatisierungssystems erzielt werden. Zudem können so auf einfachste Art und Weise sicherheitsgerichtete Automatisierungsfunktionen eingeführt werden, ohne dass sich die Zykluszeiten zumindest für die Routinen aus den Standard-Programmteilen wesentlich verändern. Ein-/Ausgabebaugruppen können so weiterhin ohne zusätzliche Verzögerungen in den Zykluszeiten von den Standard-Programmteilen der Steuerung gesteuert und im Bedarfsfall von den fehlersicheren-Programmteilen abgeschaltet werden.

Dadurch, dass in der Ein-/Ausgabebaugruppe Mittel zum Betreiben von zumindest eines an die Ein-/Ausgabebaugruppe anschließbaren Aktors vorgesehen sind, die bei einem im Automatisierungssystem auftretenden Fehlerfall vom fehlersicheren-Programmteil so steuerbar sind, das die angeschlossenen Aktoren in einen sicheren Zustand überführt werden und dieser sichere Zustand von einem Standard-Busprotokoll oder auch von der Ein-/Ausgabebaugruppe selbst nicht wieder aufgehoben werden kann, ist sichergestellt, dass die Aktoren nur durch eine Freigabe aus dem sicherheitsgerichteten Programmteil wieder aktiviert werden können. Diese Freigabe kann zum Beispiel automatisch oder auch manuell, nach einer Überprüfung, durch ein Servicepersonal erfolgen.

Entsprechende Vorteile ergeben sich für das erfindungsgemäße Automatisierungssystem zum Ausführen von sicherheitsgerichteten Automatisierungsfunktionen, wenn zumindest eine der Ein-/Ausgabebaugruppen sowohl von den Standard-Programmteilen über das kommunizierte Standard-Busprotokoll als auch von den fehlersicheren-Programmteilen über das kommunizierte fehlersichere-Busprotokoll gesteuert wird, und wobei für diese Ein-/Ausgabebaugruppe das fehlersichere-Busprotokoll eine höhere Priorität aufweist als das Standard-Busprotokoll.

Es sind bei der Ein-/Ausgabebaugruppe zusätzlich Mittel zum Anschließen von Aktoren vorgesehen, die redundante Anschlusspaare zum Anschließen von Aktoren (40) aufweist, wobei die Mittel zum Betreiben des zumindest einen Aktors im auftretenden Fehlerfall jeweils beide Anschlüsse der redundanten Anschlusspaare freischaltet und in allen anderen Fällen nur ein Anschluss der redundanten Anschlusspaare. Dadurch wird eine zusätzliche Sicherheit erreicht.

Weitere vorteilhafte Ausführungen und bevorzugte Weiterbildungen der Erfindung sind den Unteransprüchen zu entnehmen.

Die Erfindung sowie vorteilhafte Ausführungen derselben werden im Weiteren beispielhaft anhand der nachfolgenden Figuren näher beschrieben. Es zeigen:
- FIG 1: ein sicherheitsgerichtetes Automatisierungssystem,
- FIG 2: eine schematische Darstellung der erfindungsgemäßen Ein-/Ausgabebaugruppe als Ausgangsbaugruppe,
- FIG 3: eine schematische Darstellung des erfindungsgemäßen sicherheitsgerichteten Automatisierungssystems,
- FIG 4: eine schematische Darstellung einer weiteren Ausbildung des erfindungsgemäßen sicherheitsgerichteten Automatisierungssystems.

Wie bereits eingangs beschrieben, weist das in FIG 1 schematisch dargestellte sicherheitsgerichtete Automatisierungssystem 1 im Wesentlichen eine zentrale Steuerung 10 mit PLC und NC auf, die über einen Feldbus 20 mit mehreren Ausgabebaugruppen 30 und einer Peripheriebaugruppe 50 verbunden ist. Die Peripheriebaugruppe 50 umfasst hier ein Interface Modul 51 zur Anbindung an den Feldbus 20, ein Spannungsversorgungsmodul 52, ein Eingabemodul 53 zum Anschließen des Not-Halt-Befehlsgeräts 60, sowie zwei Lastschaltmodule 54. An den Ausgabebaugruppen 30 sind im vorliegenden Beispiel nur Ventile 40 als Aktoren angeschlossen. Entsprechend könnten aber genauso Lastschütze zum Abschalten von Motoren, usw. als Aktoren an die Ausgabebaugruppen 30 angeschlossen werden.

Im normalen Betriebsfall des Automatisierungssystems 1 werden zur Durchführung der projektierten Automatisierungsfunktionen die angeschlossenen Aktoren 40 über ein Standard-Busprotokoll S von dem Standard-Programmteil 12 der PLC und/oder gegebenenfalls auch von dem Standard-Programmteil 11 der NC gesteuert.

Die in FIG 1 dargestellte Peripheriebaugruppe 50 mit den Modulen 51 bis 54 dient der sicherheitsgerichteten Abschaltung der Ausgangsbaugruppen 30 und damit der Abschaltung der Aktoren 40 im Fehlerfall. Tritt ein solcher Fehlerfall ein, werden durch die Auslösung des an der Peripheriebaugruppe 50 angeschlossenen Not-Halt-Befehlsgeräts 60 oder aber auch durch ein von den fehlersicheren-Programmteilen 13 und 14 der Steuerung 10 an die Peripheriebaugruppe 50 kommuniziertes fehlersicheres-Busprotokoll F die Aktoren 40 von der Spannungsversorgung 52 freigeschaltet und damit die Aktoren abgeschaltet. Die Aktoren 40 können so über die Verbindung 70 beispielsweise mittels des Signals F'=0V in einen sicheren Zustand überführt werden, um keine Gefahrenquelle darzustellen.

Zur Vermeidung solcher, wie in FIG 1 gezeigt, komplexer Automatisierungssystems, insbesondere mit unterschiedlichen Wegen für die Übertragung der Standard-Busprotokolle S und der fehlersicheren-Busprotokolle F, ist nun erfindungsgemäß ein verbessertes Automatisierungssystem und eine entsprechende Ein-/Ausgabebaugruppe vorgesehen. Das erfindungsgemäße Automatisierungssystem und die entsprechende Ein-/Ausgabebaugruppe sind dabei so ausgebildet, dass ein einfacherer Aufbau eines Automatisierungssystems möglich ist, ohne dass sich die Zykluszeiten für die Routinen aus den Standard-Programmteilen 11 und 12 wesentlich verlängern. So werden die Aktoren 40 auf einfachste Art und Weise sicherheitsgerichtet abgeschaltet, ohne dass es zu nennenswerten zeitlichen Verzögerungen im normalen Betrieb, das heißt während der Ausführung der projektierten standardmäßig vorgesehenen Automatisierungsfunktionen, kommt.

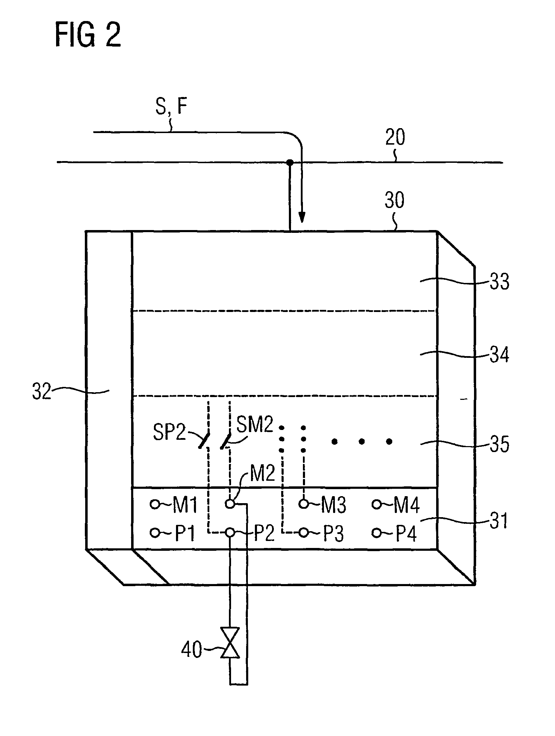

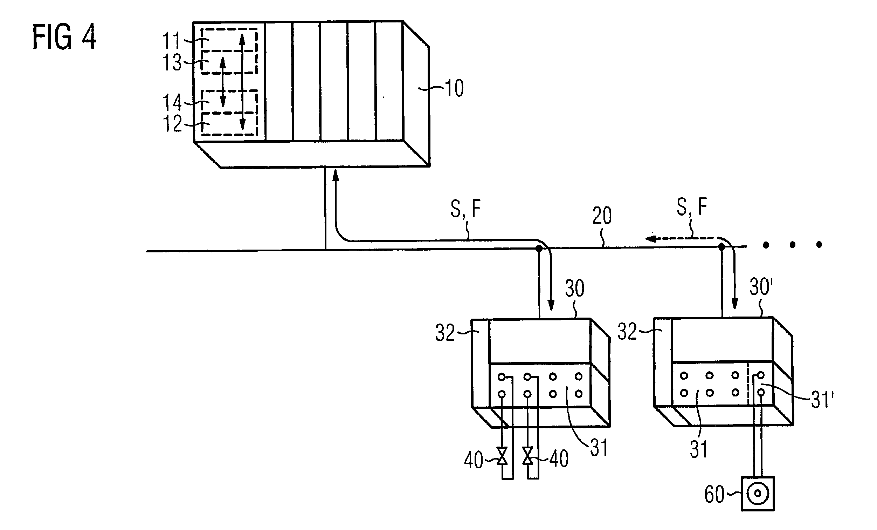

FIG 2 zeigt den prinzipiellen Aufbau der erfindungsgemäßen Ein-/Ausgabebaugruppe 30, an die zur einfacheren Beschreibung der vorliegenden Erfindung nur Aktoren 40 angeschlossen sind, so dass sie im strengen Sinne eine reine Ausgabebaugruppe darstellt. Eine weitere allgemeinere Ausbildung der Ein-/Ausgabebaugruppe zum Anschließen von Aktoren und/oder Sensoren wird dagegen detaillierter mit Bezug auf FIG 4 beschrieben.

Die erfindungsgemäß verbesserte Ausgabebaugruppe 30 weist dabei, wie in FIG 2 schematisch dargestellt, verschiedene Mittel 31, 32, 33, 34 und 35 auf. Die Ausbildung der Mittel 31 zum Anschließen von einem oder mehreren Aktoren sind bekannt. In der Regel weisen sie redundante Anschlusspaare MP1, MP2, MP3, MP4 auf, an die jeweils die einzelnen Aktoren 40 angeschlossen werden. Mittel 32 dienen als Interface zu einer Spannungsversorgung, können aber auch selbst eine der Ausgangsbaugruppe eigene Spannungsversorgung aufweisen.

Weiterhin sind Mittel 33 vorgesehen, die als Interface zum Feldbus 20 dienen. Entsprechend ausgebildet könnten diese Mittel 33 auch als Interface zur drahtlosen Übertragung mit der Steuerung 10 dienen. Die von den Mitteln 33 empfangenen Busprotokolle werden zur weiteren Bearbeitung an die entsprechend als Prozessor ausgebildeten Mittel 34 weitergereicht. Umgekehrt werden über diese Mittel 33 ebenso die im Prozessor 34 generierte Signale oder auch die von angeschlossenen Sensoren empfangenen Signale entsprechend bearbeitet um sie an die Steuerung 10 weiterzuleiten. Die Mittel 33 dienen somit zur Kommunikation zwischen der Steuerung 10 und der Ein-/Ausgabebaugruppe 30.

Des Weiteren weist die Ein-/Ausgabebaugruppe 30 Mittel 35 auf, die zusammen mit den Mitteln 34 die Mittel zum Betreiben der Aktoren 40 bilden. Die Mittel 35 können dabei, wie in Figur 2 schematisch angedeutet, als Schalter ...,SP2, SM2,.... zum Schalten der entsprechenden Anschlüsse ...,P2,M2,... der Anschlusspaare MP1, MP2, MP3, MP4 angesehen werden, die in entsprechender Weise von den Mitteln 34 gesteuert werden.

Erfindungsgemäß kann nun die Ein-/Ausgabebaugruppe 30 sowohl von den Standard-Programmteilen 11 und 12 über ein kommuniziertes Standard-Busprotokoll S als auch von den fehlersicheren-Programmteilen 13, 14 über ein kommuniziertes fehlersicheres-Busprotokoll F gesteuert werden. Dazu werden die kommunizierten Busprotokolle von den Mitteln 33 empfangen und an die Mittel 34 zur weiteren Verarbeitung weitergereicht. Zusammen mit den Mitteln 35 werden die Mittel 34 dann in Abhängigkeit des empfangenen Busprotokolls S oder F entsprechende Maßnahmen zur Steuerung der angeschlossenen Aktoren 40 vornehmen. Dadurch, dass zudem für die Ein-/Ausgabebaugruppe 30 ein kommuniziertes und empfangenes fehlersicheres-Busprotokoll F eine höhere Priorität aufweist als ein entsprechend kommuniziertes Standard-Busprotokoll S, können die Aktoren 40 von den Mitteln 34 und 35 so betrieben werden, dass sie im Fehlerfall aufgrund eines übertragenen fehlersicheren-Busprotokolls F in einen sicheren Zustand überführt werden können, der nicht wieder durch ein übertragenes Standard-Busprotokoll S aufgehoben werden kann.

In einer vorteilhaften Ausführung erfolgt diese priorisierte Abschaltung der Aktoren dadurch, dass im Fehlerfall beide Anschlüsse M2,P2 von den Mitteln 34,35 freigeschaltet werden (Plus-Minus schaltend) und in allen anderen Fällen von einem über den Feldbus übermittelten Standard-Protokoll S nur einer der Anschlüsse, nämlich P2, freigeschaltet wird (Plus schaltend). Somit kann auf einfachste Weise ermittelt werden, dass, wenn die Schalter P2 und M2 gleichzeitig geschaltet wurden, eine sicherheitsgerichtete Abschaltung des Aktors erfolgt ist. Diese Schaltung des Schalters M2 kann vom Standard-Busprotokoll S nicht rückgängig gemacht und damit aufgehoben werden, so dass erfindungsgemäß eine durch das fehlersichere-Busprotokoll bewirkte Abschaltung des Aktors eine höhere Priorität besitzt als die Schaltung durch das Standard-Busprotokoll. Sowohl die Verarbeitung von Standard-Busprotokollen und fehlersicheren-Busprotokollen als auch deren Priorisierung wird dabei vorzugsweise softwarebasiert in den Mitteln 34 und 35 vorgenommen.

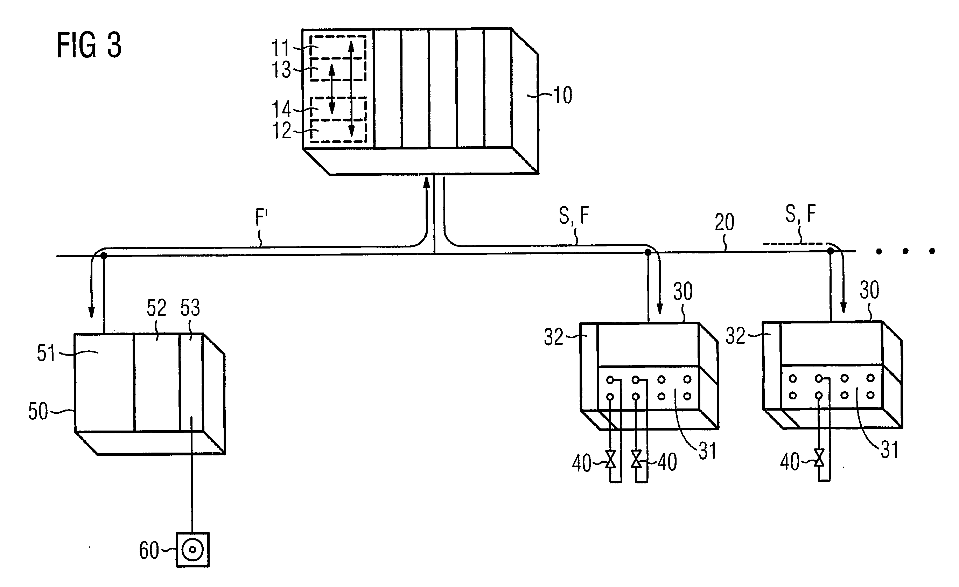

FIG 3 zeigt eine schematische Darstellung des erfindungsgemäßen sicherheitsgerichteten Automatisierungssystems 1, bei dem die erfindungsgemäße Ein-/Ausgabebaugruppe 30 Verwendung findet. Wie in FIG 3 angedeutet, können nun über den Feldbus 20 sowohl das Standard-Busprotokoll S als auch das fehlersichere-Busprotokoll F direkt zwischen der Steuerung 10 und der Ein-/Ausgabebaugruppe 30 übertragen werden. Die Ein-/Ausgabebaugruppe 30 kann somit von beiden Busprotokollen S und F direkt angesprochen, adressiert und somit mit der Steuerung 10 kommunizieren. Eine zusätzliche Abschaltung mittels eines an der Peripheriebaugruppe 50 angeschlossenen Not-Halt-Befehlsgeräts 60 kann vorgesehen sein. In diesem Falle wird im Fehlerfall, das heißt nach Betätigung des Not-Halt Befehlsgerätes 60 zuerst eine Kommunikation über ein entsprechendes Busprotokoll F' zwischen der Peripheriebaugruppe 50 mit der Steuerung 10 erfolgen und abhängig davon eine weiteres fehlersicheres-Busprotokoll F von der Steuerung 10 an die entsprechende Ein-/Ausgabebaugruppe 30 kommuniziert. Dadurch, dass die Ein-/Ausgabebaugruppe 30 sowohl über das Standard-Busprotokoll S als auch über das fehlersichere-Busprotokoll F steuerbar ist, können so weiterhin die Standardfunktionen zeitoptimal ausgeführt und gleichzeitig die sicherheitsgerichteten Funktionen ohne größeren Aufwand implementiert werden. Insbesondere entfallen bei dieser erfindungsgemäßen Ausführung die aufwendigen Lastschaltmodule der Peripheriebaugruppe.

Eine weitere Vereinfachung kann erreicht werden, wenn die ganze Peripheriebaugruppe 50 entfallen kann. Dafür muss, wie in FIG 4 dargestellt, zumindest eine weitere Ein-/Ausgabebaugruppe 30 zusätzliche Mittel 31' zum Anschließen von Sensoren, wie beispielsweise das Not-Halt-Befehlsgerät 60, aufweisen. Diese Ein-/Ausgabebaugruppe 30 kann somit wie in FIG 4 dargestellt mit an den Mitteln 31' angeschlossenen Sensoren 60 als reine Eingabebaugruppe dienen. Wie angedeutet kann eine Ein-/Ausgabebaugruppe 30 aber sowohl Mittel 31 zum Anschließen von Aktoren, als auch Mittel 31' zum Anschließen von Sensoren aufweisen. Zur Kommunikation zwischen den an einer Ein-/Ausgabebaugruppe 30 angeschlossenen Aktoren 40 und/oder Sensoren 60 und der Steuerung 10 erfolgt weiterhin durch geeignete Umsetzung der Busprotokolle in die Aktor- bzw. Sensorsignale und umgekehrt durch die Mittel 33, 34, und 35.

Die in den Figuren 2 bis 4 dargestellten Ausführungsformen sollen: nur beispielhaft die Erfindung erläutern. Von der Erfindung mit umfasst sind aber viele weitere Ausführungen, insbesondere auch der erfindungsgemäßen Ein-/Ausgabebaugruppe. So kann die erfindungsgemäße Ein-/Ausgabebaugruppe, wie zuvor beschrieben, sowohl mit Aktoren als auch Sensoren beschaltet sein. Dadurch, dass erfindungsgemäß die Ein-/Ausgabebaugruppe 30 sowohl von einem Standard-Busprotokoll S als auch von einem fehlersicheren-Busprotokoll F über den Feldbus 20 ansprechbar ist, können einzelne Anschlusspaare MP1 -MP4 über diese Busprotokolle S und F auch selektiv ausgewählt und entsprechende selektive Aktionen mit einzelnen Aktoren oder Sensoren ausgeführt werden. So können beispielsweise einzelne Aktoren sicherheitsgerichtet geschaltet werden, weitere angeschlossene Aktoren oder auch Sensoren von dieser sicherheitsgerichteten Schaltung aber unberührt bleiben. Entsprechend können Sensoren selektiv gelesen werden, usw.

## Patentansprüche

1. Ein-/Ausgabebaugruppe (30) für ein sicherheitsgerichtetes Automatisierungssystem (1), wobei
- das sicherheitsgerichtete Automatisierungssystem (1) zumindest eine mit der Ein-/Ausgabebaugruppe (30) verbundene Steuerungsbaugruppen (10) umfasst, und wobei
-- die Steuerungsbaugruppe (10) Standard-Programmteile (11,12) und fehlersichere-Programmteile (13,14) aufweist, um über entsprechende Standard-Busprotokolle (S) und fehlersichere Busprotokolle (F) mit verbundenen Ein-/Ausgabebaugruppen (30, 30', 50) zu kommunizieren;
- die Ein-/Ausgabebaugruppe (30) sowohl von den Standard-Programmteilen (11,12) über das kommunizierte Standard-Busprotokoll (S) als auch von den fehlersicheren-Programmteilen (13,14) über das kommunizierte fehlersichere Busprotokoll (F) steuerbar ist, **dadurch gekennzeichnet, dass**:
-- für die Ein-/Ausgabebaugruppe (30) das fehlersichere-Busprotokoll (F) eine höhere Priorität aufweist als das Standard-Busprotokoll (S), und dass
- Mittel (34,35) zum Betreiben von zumindest eines an der Ein-/Ausgabebaugruppe anschließbaren Aktors (40) vorgesehen sind, wobei
-- bei einem auftretenden Fehlerfall diese Mittel (34,35) über das kommunizierte fehlersichere-Busprotokoll (F) so steuerbar sind, dass die angeschlossenen Aktoren (40) in einen sicheren Zustand überführt werden und dieser sichere Zustand von einem weiteren kommunizierten Standard-Busprotokoll (S) nicht wieder aufgehoben werden kann und dass
- Mittel (31) zum Anschließen von Aktoren (40) vorgesehen sind, wobei
-- diese Mittel (31) redundante Anschlusspaare (MP2,...) zum Anschließen von Aktoren (40) aufweisen;
- die Mittel (34 und 35) zum Betreiben des zumindest einen Aktors im auftretenden Fehlerfall jeweils beide Anschlüsse (M2,P2) der redundanten Anschlusspaare (MP2,...) freischaltet und in allen anderen Fällen nur ein Anschluss (P2) der redundanten Anschlusspaare (MP2).

2. Ein-/Ausgabebaugruppe (30) nach Anspruch 1,
**dadurch gekennzeichnet , dass** die Mittel (34,35) zum Betreiben des zumindest einen Aktors (40) die angeschlossenen Aktoren (40) selektiv in den sicheren Zustand überführen.

3. Ein-/Ausgabebaugruppe (30) nach Anspruch 1 oder 2,
**dadurch gekennzeichnet, dass**
- Mittel (31') zum Anschließen von Sensoren vorgesehen sind, und
- die Mittel (34,35) zum Betreiben des zumindest einen Aktors die von einem angeschlossenen Sensor eingehenden Signale an die Steuerbaugruppe (10) weitergeben.

4. Automatisierungssystem (1) zum Ausführen von sicherheitsgerichteten Automatisierungsfunktionen mit einer oder mehreren Steuerungsbaugruppen (10) und einer oder mehreren mit diesen verbundenen Ein-/Ausgabebaugruppen (30, 30',50), wobei
- die Steuerungsbaugruppe (10) Standard-Programmteile (11,12) und fehlersichere-Programmteile (13,14) aufweist, um über entsprechende Standard-Busprotokolle (S) und fehlersichere-Busprotokolle (F) mit den verbundenen Ein-/Ausgabebaugruppen (30, 30',50) zu kommunizieren;
- zumindest eine der Ein-/Ausgabebaugruppe (30) sowohl von den Standard-Programmteilen (11,12) über das kommunizierte Standard-Busprotokoll (S) als auch von den fehlersicheren-Programmteile (13,14) über das kommunizierte fehlersichere-Busprotokoll (F) gesteuert wird, **dadurch gekennzeichnet, dass**
-- für diese Ein-/Ausgabebaugruppe (30) das fehlersichere-Busprotokoll (F) eine höhere Priorität aufweist als das Standard-Busprotokoll (S) und dass
- die Ein-/Ausgabebaugruppe (30) Mittel (34,35) zum Betreiben von zumindest einem anschließbaren Aktor (40) aufweist, wobei
- bei einem auftretenden Fehlerfall diese Mittel (34,35) über das kommunizierte fehlersichere-Busprotokoll (F) so gesteuert werden, dass die angeschlossenen Aktoren (40) in einen sicheren Zustand überführt werden und dieser sichere Zustand von einem weiteren kommunizierten Standard-Busprotokoll (S) nicht wieder aufgehoben werden kann, und dass
- Mittel (31) zum Anschließen von Aktoren (40) vorgesehen sind, wobei
-- diese Mittel (31) redundante Anschlusspaare (MP2,...) zum Anschließen von Aktoren (40) aufweisen;
- die Mittel (34 und 35) zum Betreiben des zumindest einen Aktors im auftretenden Fehlerfall jeweils beide Anschlüsse (M2,P2) der redundanten Anschlusspaare (MP2,...) freischaltet und in allen anderen Fällen nur ein Anschluss (P2) der redundanten Anschlusspaare (MP2).

5. Automatisierungssystem (1) nach Anspruch 4,
**dadurch gekennzeichnet, dass** die Mittel (34,35) zum Betreiben des zumindest einen Aktors (40) die angeschlossenen Aktoren (40) selektiv in den sicheren Zustand überführen.

6. Automatisierungssystem (1) nach Anspruch 4, oder 5,
**dadurch gekennzeichnet, dass**
- die Ein-/Ausgabebaugruppe (30) Mittel (31') zum Anschließen von Sensoren aufweist, und
- die Mittel (34,35) zum Betreiben des zumindest einen Aktors die von einem angeschlossenen Sensor eingehenden Signale an die Steuerbaugruppe (10) weitergeben.

## Claims

1. Input/output assembly (30) for a safety-oriented automation system (1), where
- the safety-oriented automation system (1) comprises at least one control assembly (10) connected to the input/output assembly (30), and where
-- the control assembly (10) has standard program parts (11, 12) and failsafe program parts (13, 14) in order to use appropriate standard bus protocols (S) and failsafe bus protocols (F) to communicate with connected input/output assemblies (30, 30', 50);
- the input/output assembly (30) can be controlled both by the standard program parts (11, 12) using the communicated standard bus protocol (S) and by the failsafe program parts (13, 14) using the communicated failsafe bus protocol (F), **characterized in that**:
-- for the input/output assembly (30) the failsafe bus protocol (F) has a higher priority than the standard bus protocol (S), and **in that**
- means (34, 35) for operating at least one actuator (40) which can be connected to the input/output assembly are provided, where
-- in an arising error situation these means (34, 35) can be controlled using the communicated failsafe bus protocol (F) such that the connected actuators (40) are transferred to a safe state and this safe state cannot be cancelled again by a further communicated standard bus protocol (S), and **in that**
- means (31) for connecting actuators (40) are provided, where
-- these means (31) have redundant connection pairs (MP2, ...) for connecting actuators (40);
- the means (34 and 35) for operating the at least one actuator respectively enable both connections (M2, P2) from the redundant connection pairs (MP2, ...) in the arising error situation and only one connection (P2) from the redundant connection pairs (MP2) in all other situations.

2. Input/output assembly (30) according to claim 1,
**characterized in that** the means (34, 35) for operating the at least one actuator (40) transfer the connected actuators (40) selectively to the safe state.

3. Input/output assembly (30) according to claim 1 or 2,
**characterized in that**
- means (31') for connecting sensors are provided, and
- the means (34, 35) for operating the at least one actuator forward the signals arriving from a connected sensor to the control assembly (10).

4. Automation system (1) for performing safety-oriented automation functions having one or more control assemblies (10) and one or more input/output assemblies (30, 30', 50) connected thereto, where
- the control assembly (10) has standard program parts (11, 12) and failsafe program parts (13, 14) in order to use appropriate standard bus protocols (S) and failsafe bus protocols (F) to communicate with the connected input/output assemblies (30, 30', 50);
- at least one of the input/output assemblies (30) is controlled both by the standard program parts (11, 12) using the communicated standard bus protocol (S) and by the failsafe program parts (13, 14) using the communicated failsafe bus protocol (F), **characterized in that**
-- for this input/output assembly (30) the failsafe bus protocol (F) has a higher priority than the standard bus protocol (S), and **in that**
- the input/output assembly (30) has means (34, 35) for operating at least one connectable actuator (40), where
- in an arising error situation these means (34, 35) are controlled using the communicated failsafe bus protocol (F) such that the connected actuators (40) are transferred to a safe state and this safe state cannot be cancelled again by a further communicated standard bus protocol (S), and **in that**
- means (31) for connecting actuators (40) are provided, where
-- these means (31) have redundant connection pairs (MP2, ...) for connecting actuators (40);
- the means (34 and 35) for operating the at least one actuator respectively enable both connections (M2, P2), from the redundant connection pairs (MP2, ...) in the arising error situation and only one connection (P2) from the redundant connection pairs (MP2) in all other situations.

5. Automation system (1) according to claim 4,
**characterized in that**
the means (34, 35) for operating the at least one actuator (40) transfer the connected actuators (40) selectively to the safe state.

6. Automation system (1) according to claim 4 or 5,
**characterized in that**
- the input/output assembly (30) has means (31') for connecting sensors, and
- the means (34, 35) for operating the at least one actuator forward the signals arriving from a connected sensor to the control assembly (10).

## Revendications

1. Module d'entrée / sortie (30) pour un système d'automatisation sécurisé (1),
- le système d'automatisation sécurisé (1) comprenant au moins un module de commande (10) relié au module d'entrée / sortie (30),
-- le module de commande (10) comportant des parties de programme standards (11, 12) et des parties de programme sécurisées (13, 14) pour communiquer avec des modules d'entrée / sortie reliés (30, 30', 50) par l'intermédiaire de protocoles de bus standards (S) correspondants et de protocoles de bus sécurisés (F) correspondants,
- le module d'entrée / sortie (30) pouvant être commandé aussi bien par les parties de programme standards (11, 12) par l'intermédiaire du protocole de bus standard (S) communiqué que par les parties de programme sécurisées (13, 14) par l'intermédiaire du protocole de bus sécurisé (F) communiqué,
**caractérisé par le fait que** :
-- pour le module d'entrée / sortie (30), le protocole de bus sécurisé (F) a une plus grande priorité que le protocole de bus standard (S),
- des moyens (34, 35) sont prévus pour faire fonctionner au moins un actionneur (40) raccordable au module d'entrée / sortie,
-- en présence d'une erreur, ces moyens (34, 35) étant commandables par l'intermédiaire du protocole de bus sécurisé (F) communiqué de telle sorte que les actionneurs raccordés (40) sont mis dans un état sûr et que cet état sûr ne peut pas être annulé par un autre protocole de bus standard (S) communiqué, et que
- des moyens (31) sont prévus pour raccorder des actionneurs (40),
-- ces moyens (31) comportant des couples de bornes redondantes (MP2, ...) pour le raccordement d'actionneurs (40) ;
- les moyens (34 et 35) destinés au fonctionnement du ou des actionneurs déconnectant en présence d'une erreur à chaque fois les deux bornes (M2, P2) des couples de bornes redondantes (MP2, ...) et déconnectant dans tous les autres cas seulement une borne (P2) des couples de bornes redondantes (MP2).

2. Module d'entrée / sortie (30) selon la revendication 1,
**caractérisé par le fait que** les moyens (34, 35) destinés au fonctionnement du ou des actionneurs (40) mettent les actionneurs raccordés (40) dans l'état sûr de manière sélective.

3. Module d'entrée / sortie (30) selon la revendication 1 ou 2,
**caractérisé par le fait que**
- des moyens (31') sont prévus pour le raccordement de capteurs, et
- les moyens (34, 35) destinés au fonctionnement du ou des actionneurs retransmettent au module de commande (10) les signaux provenant d'un capteur raccordé.

4. Système d'automatisation (1) pour l'exécution de fonctions d'automatisation sécurisées comportant un ou plusieurs modules de commande (10) et comportant un ou plusieurs modules d'entrée / sortie (30, 30', 50) reliés à ceux-ci,
- le module de commande (10) comportant des parties de programme standards (11, 12) et des parties de programme sécurisées (13, 14) pour communiquer avec des modules d'entrée / sortie reliés (30, 30', 50) par l'intermédiaire de protocoles de bus standards (S) correspondants et de protocoles de bus sécurisés (F) correspondants,
- au moins l'un des modules d'entrée / sortie (30) étant commandé aussi bien par les parties de programme standards (11, 12) par l'intermédiaire du protocole de bus standard (S) communiqué que par les parties de programme sécurisées (13, 14) par l'intermédiaire du protocole de bus sécurisé (F) communiqué,
**caractérisé par le fait que**
-- pour ce module d'entrée / sortie (30), le protocole de bus sécurisé (F) a une plus grande priorité que le protocole de bus standard (S), et que
- le module d'entrée / sortie (30) comporte des moyens (34, 35) pour faire fonctionner au moins un actionneur (40) raccordable au module d'entrée / sortie,
- en présence d'une erreur, ces moyens (34, 35) étant commandés par l'intermédiaire du protocole de bus sécurisé (F) communiqué de telle sorte que les actionneurs raccordés (40) sont mis dans un état sûr et que cet état sûr ne peut pas être annulé par un autre protocole de bus standard (S) communiqué, et
- des moyens (31) sont prévus pour raccorder des actionneurs (40),
-- ces moyens (31) comportant des couples de bornes redondantes (MP2, ...) pour le raccordement d'actionneurs (40) ;
- les moyens (34 et 35) destinés au fonctionnement du ou des actionneurs déconnectant en présence d'une erreur à chaque fois les deux bornes (M2, P2) des couples de bornes redondantes (MP2, ...) et déconnectant dans tous les autres cas seulement une borne (P2) des couples de bornes redondantes (MP2).

5. Système d'automatisation (1) selon la revendication 4,
**caractérisé par le fait que** les moyens (34, 35) destinés au fonctionnement du ou des actionneurs (40) mettent les actionneurs raccordés (40) dans l'état sûr de manière sélective.

6. Système d'automatisation (1) selon la revendication 4 ou 5,
**caractérisé par le fait que**
- le module d'entrée / sortie (30) comporte des moyens (31') pour le raccordement de capteurs, et
- les moyens (34, 35) destinés au fonctionnement du ou des actionneurs retransmettent au module de commande (10) les signaux provenant d'un capteur raccordé.
